# EUROPÄISCHE PATENTSCHRIFT

(11) **EP 0 693 989 B1**
(45) Veröffentlichungstag und Bekanntmachung des Hinweises auf die Patenterteilung: **10.09.1997**
(21) Anmeldenummer: 94913525.5
(22) Anmeldetag: 05.04.1994
(51) Int. Cl.: B27N 7/00, B29C 63/04

(54) **UMMANTELUNG VON KANTEN MIT BESCHICHTUNGSWERKSTOFFEN**
ENCASING EDGES WITH COATING MATERIALS
ENROBAGE DE BORDS AVEC DES MATERIAUX DE RECOUVREMENT

(30) Priorität: 14.04.1993 DE 4311830
(43) Veröffentlichungstag der Anmeldung: 31.01.1996
(73) Patentinhaber: Henkel Kommanditgesellschaft auf Aktien, 40191 Düsseldorf (DE)
(72) Erfinder: KRINGS, Hans, D-42799 Leichlingen (DE); STIEHL, Jutta, D-01189 Dresden (DE)
(86) Internationale Anmeldenummer: EP9401047
(87) Internationale Veröffentlichungsnummer: WO9423916

(56) Entgegenhaltungen:
- EP-A- 0 028 862
- EP-A- 0 389 400
- DE-U- 9 114 920
- US-A- 5 234 519
- DATABASE WPI Week 9203, Derwent Publications Ltd., London, GB; AN 92-019169 & JP,A,3 266 602 (OKURA INDUSTRIAL KK) 27. November 1991

## Beschreibung

Die Erfindung betrifft ein Verfahren zum Ummanteln von Kanten nach dem Oberbegriff des Anspruch 1.

Bei der Kantenummantelung werden Kernwerkstoffe, z. B. Spanplatten, MDF- und Faserplatten mit Beschichtungswerkstoffen ummantelt. Dabei kann es sich z. B. um sogenannte dekorative Schichtpresstoffplatten handeln, die auch als dekorative Schichtstoffplatten bezeichnet werden. Diese bestehen aus mit härtbaren Kunstharzen imprägnierten, in Wärme verpreßten Cellulosebahnen. Beim Postforming handelt es sich um eine Kantenummantelung mit Hilfe nachformbarer dekorativer Schichtstoffplatten. Typische Produkte sind Arbeitsplatten sowie Möbel aller Art und Fensterbänke. Die dekorativen Schichtstoffplatten werden üblicherweise mit Harnstoff-, PVAc- und Kontaktklebern verklebt. Beim Postforming sind zwei Verfahrensvarianten bekannt. Die dekorative Schichtstoffplatte (DKS) wird vorgeformt und in einem getrennten Arbeitsgang mit der Trägerplatte verklebt. Möglich ist aber auch das Verkleben der DKS mit der Breitfläche der Trägerplatte und anschließendem Umformen der angearbeiteten Kante mit dem Überstand der DKS. Auch schwierige Werkstücke lassen sich mit nachformbarer DKS belegen.

In einer als "Postforming-Komplett-Verfahren" bezeichneten Variante wird die DKS mit der Breitfläche der Trägerplatte verklebt` in die an der DKS liegenden Kante und längs zu dieser eine Nut eingefräst, so daß die Kante quasi abgerundet wird und nach dem Beleimen und Umformen des Überstands nicht zum Brechen der DKS im Kantenbereich führt.

Bekannt ist ferner der Einsatz von Schmelzklebern bei der Kantenummantelung mit Furnieren und der Einsatz von Dispersions- oder Lösungsmittelklebern bei der Kantenummantelung mit Filmen und Folien. Auch der Einsatz von Ethylen-Vinyl-Acetat-Schmelzklebern (EVA), höher wärmestandfesten Polyamidschmelzklebern oder PVAc-Klebern ist bekannt.

Bei der Verwendung der wegen seiner Lösungsmittelfreiheit vorteilhaften Schmelzklebstoffe treten jedoch bei der Kantenummantelung nach dem Postforming-komplett-Verfahren Probleme auf. Nach dem Erkalten und Aushärten des Schmelzklebstoffes werden Hohlräume (Blasen, Lunker) zwischen dem Untergrund des Profils und dem Beschichtungswerkstoff, insbesondere im Bereich der Kantennut, festgestellt. Bei den heutzutage üblichen relativ dünnen Beschichtungswerkstoffen besteht daher die Gefahr, daß die Beschichtung bei Belastung einer solchen Stelle, wie sie im täglichen Gebrauch oft vorkommt, eingedrückt und beschädigt wird.

Bei Verfahren zur Kantenummantelung ohne Einfräsen einer Nut in die Kante stellen sich die gleichen Probleme. Hier wird oft mit Dispersionsklebstoffen und entsprechend hohen Temperaturen zum Abdampfen des Lösungsmittels bzw. Wassers gearbeitet. Die hohen Arbeitsgeschwindigkeiten beim Ummanteln erfordern den Auftrag eines zusätzlichen Klebstoffs, in der Regel eines Schmelzklebstoffs, als Montagehilfe auf die Schmalseite der Trägerplatte etwa in der Mitte zwischen den Längskanten. Nach dem Erkalten werden auch hier Hohlräume in der Klebstoffschicht festgestellt, die zu den gleichen, obengenannten Problemen führen.

Der Erfindung liegt daher die Aufgabe zugrunde, das eingangs genannte Verfahren zur Kantenummantelung zu verbessern, so daß das Problem der Hohlräume und Blasen innerhalb der Klebstoffschicht nicht mehr auftritt.

Der Lösung der Aufgabe liegt die Erkenntnis zugrunde, daß die Hohlräume insbesondere durch die Schrumpfung beim Erkalten des Klebstoffes, aber auch durch das Abdampfen niedermolekularer Bestandteile des Klebers sowie durch das Verdampfen der im Kleber vorhandenen Restfeuchte bei der erhöhten Temperatur entstehen. Erfindungsgemäß wird daher zusätzlich zum Klebstoff ein Stoff eingesetzt, der bei der Verfestigung nicht schrumpft und bei dessen Anwendung keine Wärmezufuhr und -abgabe erforderlich ist.

Erfindungsgemäß wird die obengenannte Aufgabe also dadurch gelöst, die beim Postforming-Komplett-Verfahren an der Umbiegekante angebrachte, z. B. eingefräste Nut mit einem Dichtstoffstrang zu befüllen. Die Eignung handelsüblicher Dichtstoffe, z. B. Fugendichtmassen bei der Kantenummantelung soll hier besonders hervorgehoben werden. Die Dichtungsmassen, die nach DIN 52460 exakter als Dichtstoffe bezeichnet werden, sind Massen zur Abdichtung undichter Stellen, sogenannter Fugen. Beispiele für derartige Dichtstoffe finden sich in Ullmanns Enzyklopädie der technischen Chemie, Band 14, 4. Auflage, Verlag Chemie, Weinheim 1977 unter dem Stichwort "Klebstoffe und Dichtungsmassen".

Als Klebstoffe können im erfindungsgemäßen Verfahren vorteilhaft Schmelzklebstoffe, insbesondere auf der Basis von Polymeren aus E/EA, E/VA, PA, PES, PIB oder PVB eingesetzt werden. Dabei bedeutet E/EA Ethylen/Ethylacrylat-Copolymer, E/VA Ethylen-Vinylacetat-Copolymer, PA Polyamid, PES Polyester, PIB Polyisobutylen und PVB Polyvinylbutyrol. Auch reaktive Polyurethane sind brauchbar.

In vorteilhaften Ausgestaltungen der Erfindung wird außerdem vorgeschlagen, daß ein Dichtstoff auf Basis von Polysiloxan (Silicon) eingesetzt wird. Auch ein Dichtstoff auf Basis von Polyurethan ist günstig. Ferner ist auch ein 2-Komponenten-Dichtstoff auf Basis von Epoxidharz möglich und vorteilhaft, ebenso Dichtstoffe auf der Basis von Polyacrylaten.

Nachfolgend wird ein Ausführungsbeispiel der Erfindung anhand einer Zeichnung kurz erläutert.

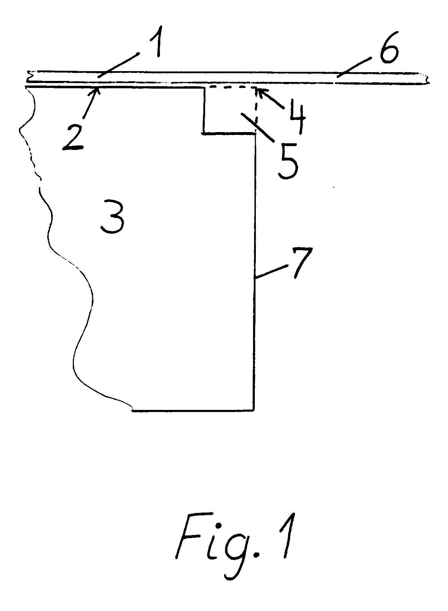

Beim Postforming-Komplett-Verfahren wird das Laminat 1, z.B. DKS, auf der Breitseite 2 der Trägerplatte 3 aufgeklebt. Dann wird die an der DKS anliegende Kante 4 der Platte 3 abgefräst, so daß eine Nut 5 entsteht. Fig. 1 veranschaulicht dieses in einer Querschnittsdarstellung. Erfindungsgemäß wird die Nut 5 mit einem Dichtstoff gefüllt. Der Überstand 6 der DKS 1 wird mit einem Schmelzklebstoff beleimt, um die Kante 4 umgeformt und an der Schmalseite 7 der Trägerplatte 3 festgeklebt.

## Patentansprüche

1. Verfahren mm Ummanteln von Kanten an beschichteten Platten, z.B. Holz-, Span-, MDF und Faserplatten, wobei die Beschichtung über die Kante übersteht wobei sich in der Stirnseite der Platte eine Nut befindet, die an die Beschichtung von innen angrenzt, und wobei die überstehende Beschichtung nach Umbiegen an die Stirnseite angeklebt wird, dadurch gekennzeichnet, daß die Nut von einem sich durch Polymerisation verfestigenden nichtschrumpfenden Dichtstoff ausgefüllt wird.

2. Verfahren nach Anspruch 1, dadurch gekennzeichnet, daß als Klebstoff ein Schmelzklebstoff auf der Basis von reaktivem Polyurethan sowie von Polymeren` aus Ethylen/Ethyl-acrylat-Copolymer, Ethylen-Vinylacetat-Copolymer, Polyamid, Polyester, Polyisobutylen oder Polyvinylbutyrol eingesetzt wird.

3. Verfahren nach Anspruch 1 oder 2, dadurch gekennzeichnet, daß ein Dichtstoff auf Basis von Polyacrylaten oder von Polysiloxan (Silicon) eingesetzt wird.

4. Verfahren nach Anspruch 1 oder 2, dadurch gekennzeichnet, daß ein Dichtstoff auf Basis von Polyurethan eingesetzt wird.

5. Verfahren nach Anspruch 1 oder 2, dadurch gekennzeichnet, daß ein 2-Komponenten-Dichtstoff auf Basis von Epoxidharz eingesetzt wird.

6. Verfahren nach einem der Ansprüche 1 bis 5, dadurch gekennzeichnet, daß die beim Postforming-Komplett-Verfahren an der Umbiegekante angebrachte Nut mit einem Dichtstoffstrang befüllt wird.

## Claims

1. A process for banding edges of coated boards, for example wood, chipboard, MDF and fiberboards, the coating projecting beyond the edge, the front of the board being formed with a groove which adjoins the coating from inside and the projecting coating being glued to the front after bending, characterized in that the groove is filled with a polymerization-hardening non-shrinking sealant.

2. A process as claimed in claim 1, characterized in that a hotmelt adhesive based on reactive polyurethane and on polymers of ethylene/ethyl acrylate copolymer, ethylene/vinyl acetate copolymer, polyamide, polyester, polyisobutylene or polyvinyl butyrol is used as the adhesive.

3. A process as claimed in claim 1 or 2, characterized in that a sealant based on polyacrylates or polysiloxane (silicone) is used.

4. A process as claimed in claim 1 or 2, characterized in that a sealant based on polyurethane is used.

5. A process as claimed in claim 1 or 2, characterized in that a 2-component sealant based on epoxy resin is used.

6. A process as claimed in any of claims 1 to 5, characterized in that the groove formed in the edge to be banded in the postforming complete process is filled with a strand of sealant.

## Revendications

1. Procédé pour habiller les bords de plaques revêtues comme par exemple de plaques de bois, d'aggloméré, de MDF et de plaques de fibres, l'habillage dépassant du bord et la face frontale de la plaque ayant une rainure adjacente de l'intérieur au revêtement et le revêtement qui dépasse est collé après repliage contre la face frontale,
caractérisé en ce que
la rainure est remplie d'une matière d'étanchéité se solidifiant par polymérisation mais ne présentant pas de retrait.

2. Procédé selon la revendication 1,
caractérisé en ce que
la colle est une colle fusible à base de polyuréthanne réactif et de polymères de copolymère Ethylène/Ethylacrylate, de copolymère Ethylène-Vinylacétate, de Polyamide, de Polyester, de Polyisobutylène ou de Polyvinylbutyrol.

3. Procédé selon la revendication 1 ou 2,
caractérisé en ce qu'
on utilise une matière d'étanchéité à base de polyacrylate ou de polysiloxane (Silicone).

4. Procédé selon la revendication 1 ou 2,
caractérisé en ce qu'
on utilise une matière d'étanchéité à base de polyuréthanne.

5. Procédé selon la revendication 1,
caractérisé en ce qu'
on utilise une matière d'étanchéité à deux composants à base de résine époxy.

6. Procédé selon l'une des revendications 1 à 5,
caractérisé en ce que
la rainure réalisée au niveau du bord de repliage dans le cas du procédé de postformage complet est remplie d'un cordon de matière d'étanchéité.
